(19)

Europäisches
Patentamt
European
Patent Office
Office européen
des brevets

(11) **EP 1 460 789 B1**

(12) **EUROPEAN PATENT SPECIFICATION**

(45) Date of publication and mention
of the grant of the patent:
**20.08.2008 Bulletin 2008/34**

(51) Int Cl.:
***H04L 1/00*** *(2006.01)*     ***H04B 17/00*** *(2006.01)*
***H04B 7/005*** *(2006.01)*     ***H04L 1/20*** *(2006.01)*

(21) Application number: **03006418.2**

(22) Date of filing: **21.03.2003**

(54) **Method and apparatus for link adaptation**

Verfahren und Vorrichtung zur Verbindungsanpassung

Procédé et dispositif d'adaptation de liaison

(84) Designated Contracting States:
**AT BE BG CH CY CZ DE DK EE ES FI FR GB GR
HU IE IT LI LU MC NL PT RO SE SI SK TR**

(43) Date of publication of application:
**22.09.2004 Bulletin 2004/39**

(73) Proprietor: **TELEFONAKTIEBOLAGET LM
ERICSSON (publ)
164 83 Stockholm (SE)**

(72) Inventor: **Malm, Peter
22648 Lund (SE)**

(74) Representative: **Andersson, Björn E. et al
Ström & Gulliksson AB
P.O. Box 793
220 07 Lund (SE)**

(56) References cited:
**EP-A- 0 890 845**     **US-A1- 2002 110 088**
**US-B1- 6 292 519**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

## Technical Field of the Invention

The present invention relates to the field of communication systems wherein adaptation of transmission parameters is provided over time. More specifically, the invention relates to a method and an apparatus used in a communication system for optimizing the link performance between unmatched transmitter and receiver units when a link quality report is utilized for the adaptation process.

## Description of Related Art

In wireless communication systems, such as mobile telecommunications systems, a transmitter unit, e.g. a base station, communicates data packets and voice to a receiver unit, e.g. a portable radio communication apparatus such as a mobile radio terminal, a mobile telephone, a pager, a communicator, i.e. an electronic organizer, a smart phone or the like. In many communication systems, link adaptation, or adaptive modulation, is an established technique to adapt physical layer (L1) transmission parameters to the changing characteristics of a radio channel of the communication system. A typical radio link exhibits e.g. fading and interference, which results in a signal-to-interference ratio (SIR) level that changes with time. Two different design strategies exist to handle the changing SIR. Firstly, power control is preferably used in scenarios where the link quality needs to be constant over time, such as for voice communication. Secondly, link adaptation is preferred for packet data transmission where the link quality may be allowed to change over time, such as GSM/EGPRS (General System for Mobile communication/Enhance General Packet Radio Service) and UMTS/HS-DSCH (Universal Mobile Telecommunications System/High Speed Downlink Shared CHannel).

In a communication system using link adaptation, the transmitting unit (Tx-unit) and the receiving unit (Rx-unit) may have unmatched characteristics. The term unmatched is used herein to denote when a transmitter does not have full knowledge of the error sensitivity of the receiver with respect to changes in the various L1 transmission parameters that are used in the link adaptation process, such as modulation type, code rate, and bandwidth. Discrepancies between adaptation parameter settings relating to a certain link quality at the Tx-unit and the Rx-unit, respectively, may lead to a SIR loss and a crippled performance gain of advanced receiver structures, which are meant to improve the peak rate of the receiver. Link adaptation systems are best effort systems, and unmatched Tx-/Rx-unit characteristics lead to non-optimum performance, which may be directly reflected on the experienced peak rate.

The inherent problem with all link adaptation systems is how the Tx-unit should be aware of in what way the Rx-unit experiences the radio link quality. Feeding back information about the link quality, which is utilized by the Tx-unit to choose transmission parameter settings, often solves this problem. This approach is used in both GSM/EGPRS and UMTS/HS-DSCH. Presently, there are two different solutions with regard to what type of information that should be fed back in the link quality report: a SIR feedback or a requested transport-format and resource combination (TFRC) feedback. A third alternative, used in GSM/EGPRS is when raw-bit error probability (BEP) is fed back to the Tx-unit, which can be considered as a filtered SIR feedback.

In case a SIR estimate is fed back to the Tx-unit, the Tx-unit knows which actual SIR, possibly affected by receiver enhancements if applicable, the Rx-unit experiences. However, the Tx-unit does not know which TFRC it should use to optimize the link performance since the receiver characteristics known to the Tx-unit and the actual receiver characteristics of the Rx-unit might not necessarily be the same, since a particular receiver's characteristics usually is not known at the Tx-unit. The reason for this is that receiver enhancements are vendor specific features, which may be introduced over time, and it is not likely that all Tx-units already deployed can be updated with receiver characteristics from each and every vendor.

In case a TFRC indicator is reported instead of a SIR value, the situation is somewhat different in the Tx-unit. When the Tx-unit receives a requested TFRC from the Rx-unit in reporting interval n, the Tx-unit may optimize the link throughput by using exactly the requested TFRC in the coming transmission. However, it is not certain that the requested TFRC matches the actual transport need. Hence the Tx-unit is faced with a TFRC selection problem: the Tx-unit chooses the TFRC that best matches the reported TFRC indicator with respect to SIR. The block size N is also taken into consideration before choosing TFRC. However, it is not certain that the Tx-unit chooses the optimum TFRC for each particular Rx BLER (BLock Error Ratio) characteristic.

Consequently, there is a problem in that the Tx-unit needs to know the optimum physical-layer parameters of a certain Rx-unit for each particular physical channel state and user data size to optimize the link quality. However, the physical channel state resides in the Rx-unit while the information about the amount of user data resides in the Tx-unit. An optimum link adaptation system would therefore have to first send the information about the amount of user data to the Rx-unit, which then reports the best possible TFRC for that amount of user data and for the current channel state back to the Tx-unit. This optimization procedure would result in an extensive overhead and delay. There is a need for a system that optimizes the link throughput without introducing any new components in the transmitting unit, and that adapts to changes of the receiver characteristics of the receiving unit.

US-2002/0110088 discloses a link adaptation system, which is capable of fast adaptation. The system can follow the quality of the downlink very rapidly. However, the system requires two uplink channels for the link quality report, one channel for full quality reports at a slightly lower rate and one channel for fast updates indicating relative changes of the link quality to take care of unmatched transmitter and receiver characteristics. As two different quality reports are transmitted over different channels, this technique requires modifications of an existing communications system wherein only one channel is dedicated for the link quality report. Also, the base station has to be modified to be able to determine the required change of the transmitter settings, which is determined based on the full and the updated link quality reports. Consequently, it is not possible to implement the updates in an existing system, which only has one channel for the link quality report. Another disadvantage with this system is that it is only possible to indicate the direction of a change of the link quality and not the actual change.

US-A-6 292 519 discloses a method of using measured estimates of received signal energy and interference values to determine a measured signal-to-interference ratio (SIR) value is determined. The measured SIR value is corrected for non-linearity to obtain a corrected SIR value using a correction function.

EP 0 890 845 discloses that in a transmitting electric power control apparatus, non-linear bias characteristic in S/N measurement is previously obtained by measurement, and a conversion table for realizing this reverse characteristic is created in an S/N measuring circuit, and when a measured S/N value is output from the dividing circuit, a table conversion circuit receives this S/N value as an input and outputs a corrected S/N value from the conversion table.

**Summary of the Invention**

One object of the present invention is to provide a method for providing a link quality measure of a downlink of a communication system comprising at least one transmitting unit (Tx-unit) and one receiving unit (Rx-unit), the communication system featuring link adaptation wherein one uplink channel is utilized for providing a link quality report to optimize the link performance, and wherein the Tx-unit does not need to have full knowledge of the receiver characteristics of the Rx-unit to optimize the link throughput.

According to the invention, this object is achieved by a method wherein the link quality measure is corrected before being used for providing a link quality report. According to the method, a link quality measure, such as a signal-to-interference ratio (SIR) of a communication link, is obtained for a current reporting interval. The link quality measure is then corrected for SIR losses, which are induced by unmatched transmission parameter (TP) settings of the Tx-unit and the Rx-unit. The content of the link quality report of the current reporting interval will then be based on the corrected link quality measure. The transmitting unit will adjust its transmission parameters according to the link quality report. Therefore, the transmissions will be adjusted according to the optimal setting with regard to the receiver characteristics.

According to one aspect of the invention, in a first embodiment, SIR reporting is utilized for the link quality report. The link quality measure is a SIR, which is corrected with a SIR value. The corrected SIR is then incorporated in the link quality report that is transmitted to the transmitting unit. The value of the link quality report could indicate desired TP settings of the physical layer (L1) that will better achieve a block error rate (BLER) target of the receiver than the TP settings used for the previous reporting interval.

The information in the link quality report may be a requested TP indicator. A TP indicator corresponding to the corrected link quality measure is comprised in the link quality report indicating a desired transmission parameter setting of the transmitting unit. The corrected link quality measure may be mapped against stored indicators to provide a TP indicator, which is assumed to best meet a certain BLER target.

The link quality measure that formed basis of the content of the previous reporting interval and the current link quality measure of the current reporting interval may be filtered before being added to the current link quality measure. This will even further improve the accuracy of the corrected link quality measure. The filtering may be provided by averaging the discrepancy between the link quality measure that was utilized to provide the link quality report of the previous reporting interval and link quality measures of each of the transmission intervals of the current reporting interval. Then, the averaged discrepancy value will be added to the link quality measure of the present reporting interval.

Another object of the invention is to provide an electronic communication apparatus capable of producing a corrected link quality measure that is used to provide a link quality report over one channel to a transmitting unit. Moreover, it is an object that the link quality report will carry information that will optimize the link performance of a communication link between a transmitting unit and the apparatus, so that the transmitting unit does not need to have full knowledge of the receiver characteristics of the apparatus.

According to a second aspect of the invention, this object is achieved by an electronic communication apparatus comprising a receiver, a quality measuring unit, a memory, and a correction unit. Further, the apparatus is adapted to determine the transmission parameter setting induced SIR losses. Also the apparatus is adapted to correct the current link quality measure based on said losses to provide a corrected link quality measure.

The apparatus may be adapted to provide a link quality report based on the corrected link quality measure. The apparatus is in one embodiment adapted to incorporate a SIR value into the link quality report, said SIR value corresponds to the corrected link quality measure. In another embodiment, the apparatus is adapted to incorporate a TP indicator corresponding to the corrected link quality measure into the link quality report.

According to a third aspect of the invention, a computer software product is provided, which comprises software code portions for performing the method according to the invention when said product is run by a mobile terminal having digital computer capabilities.

One advantage of the present invention is that the Tx-unit does not need to have full knowledge of the receiver characteristics of the Rx-unit. Also, the link quality report may be transmitted over only one control channel and yet optimize the link performance. Also, it is possible to introduce other receiver characteristics of the Rx-unit without updating the Tx-unit, as all corrections of the link quality measure is made at the receiving unit. Also, one Tx-unit may serve several Rx-units having different receiver characteristics with optimized performance although the Tx-unit does not have full knowledge of the characteristics of any of the receivers.

Further preferred embodiments of the invention are defined in the dependent claims.

It should be emphasized that the term "comprises/comprising" when used in this specification is taken to specify the presence of stated features, integers, steps or components but does not preclude the presence or addition of one or more other features, integers, steps, components or groups thereof.

## Brief Description of the Drawings

Further objects, features, and advantages of the invention will appear from the following description of several embodiments of the invention, wherein various features of the invention will be described in more detail with reference to the accompanying drawings, in which:

Fig. 1 is a block diagram of a communication system employing link adaptation according to the present invention, and a front view of two mobile telephones;
Fig. 2 is a block diagram of the mobile telephone of Fig. 1 showing components for providing a corrected link quality measure;
Fig. 3a is a BLER versus SIR diagram for SIR reporting;
Fig. 3b is a BLER versus SIR diagram for TFRC reporting;
Fig. 4 is a table of possible link adaptation parameters according to an exemplary embodiment of the invention;
Figs. 5a and 5b are a flowchart of the steps according to a first embodiment of the invention, wherein SIR reporting is utilized; and
Figs. 6a and 6b are a flowchart of the steps according to a second embodiment of the invention, wherein TFRC reporting is utilized; and
Figs. 7a and 7b are a flowchart of the steps according to a third embodiment of the invention, wherein TFRC reporting is utilized.

## Detailed Description of Embodiments

In a packet-switched data communication system, a link quality measure of a communication link between a transmitting unit (Tx-unit) and a receiving unit (Rx-unit) provides valuable information to the Tx-unit in determining the proper settings of the physical layer (L1) transmission parameters, such as data rate, encoding, modulation and scheduling of data communications. To provide as high performance as possible, it is beneficial to provide the quality measure efficiently and accurately from the receiver unit (Rx-unit) to the transmitter unit (Tx-unit). According to the present invention, the link quality measure as determined by the Rx-unit is corrected or adjusted for SIR losses induced by unmatched Tx-unit and Rx-unit transmission parameter settings before reported to the Tx-unit, wherein the link quality measure will provide for a better performance of the link throughput.

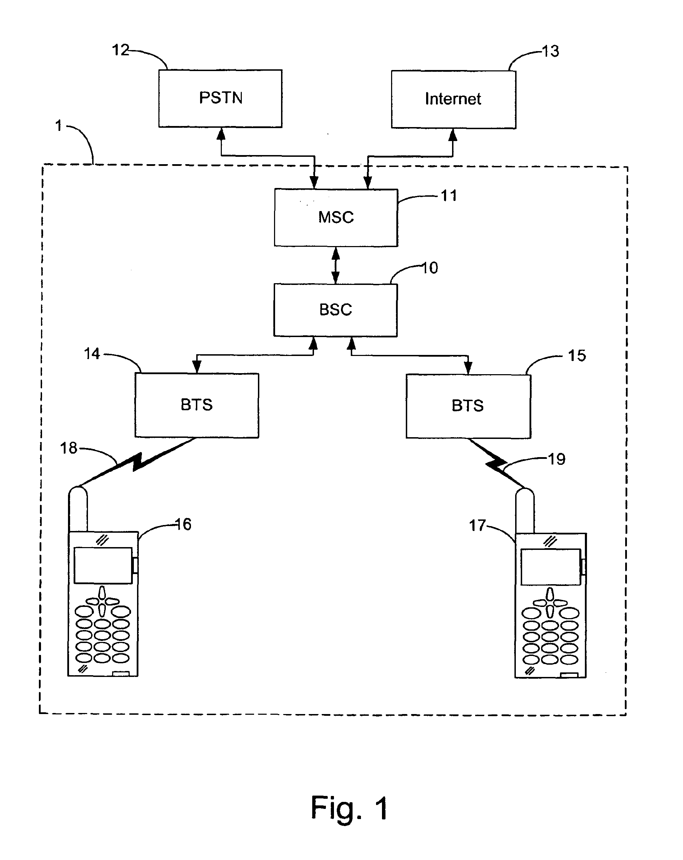

Fig. 1 discloses an exemplary communication system 1, wherein the present invention for providing a corrected link quality measure is used. The communication system 1 is a UMTS/HS-DSCH telecommunication system. However, other communication systems utilizing link adaptation are equally possible within the scope of the invention, such as GSM/EGPRS. In spread spectrum wireless communication systems, link adaptation is controlled by the quality of a communication downlink, wherein a signal-to-interference ratio (SIR) estimate of a pilot channel, such as the CPICH channel in UMTS, provides a quality measure for evaluating the link.

The communication system 1 comprises a base station controller 10 (BSC) connected to a mobile switching center (MSC) 11. The MCS 11 may also be operatively connected to a public switched telephone network (PSTN) 12, and a wired communication system 13, such as the Internet. The BSC 10 is also connected to at least one base transceiver station (BTS) 14, 15 each being connectible to one or several mobile terminals 16, 17 over a wireless interface 18, 19. Mobile terminal as used herein comprises, but is not limited to, a radio terminal, a mobile telephone, a pager, or a communicator, i.e. a personal digital assistant, a smartphone or the like. In Fig. 1, the mobile terminals are embodied as mobile telephones 18, 19.

The MSC 11 is the interface between the wireless communication system 1 and the wired subsystems 12, 13. The BSC 10 is the control and management system for one or several BTS 14, 15. The BSC 10 exchanges messages with the BTS 14, 15 and the MSC 11. Each of the BTS 16, 17 consists of transceivers placed at a single location.

The wireless interface 18, 19 includes radio air interface physical channels between the BTS 14, 15 and the mobile terminals 16, 17, including but not limited to a pilot channel or embedded pilot symbols and a data channel. The physical channels 18, 19 are communication paths described in terms of the digital coding and RF (radio frequency) characteristics for the downlink and the uplink.

When used in this description Tx-unit means the transmitting unit, such as the BTS 14, 15 controlled by the BCS 10, and Rx-unit means the receiving unit, such as any of the mobile terminals 16, 17, if not otherwise stated.

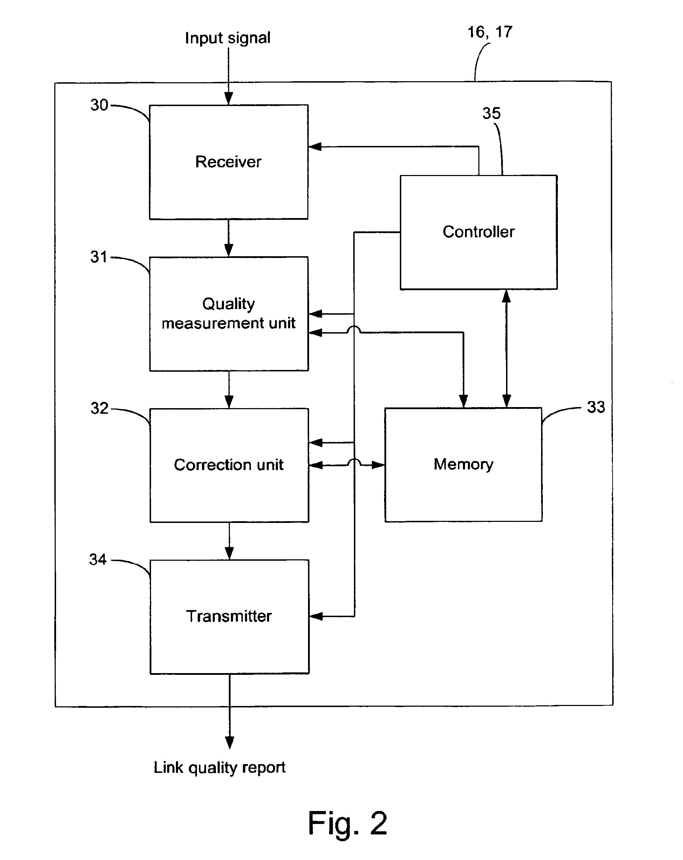

Fig. 2 discloses the mobile terminal 16, 17, comprising a digital receiver 30, which is adapted to processes signals received over the wireless interface 18, 19. The receiver 30 is connected to a quality measurement unit 31, that is adapted to provide a link quality measure as will be further described below. The measurement unit 31 is connected to a correction unit 32, which according to the invention is adapted to correct or adjust the current link quality measure before said measure is utilized to form the link quality report. The correction unit 32 and the measurement unit 31 are connected to a memory 33, wherein a look-up table for storing indicators relating to a certain transmission parameter (TP) setting, such as transport format and resource allocation combination (TFRC) indicators or channel quality indicators (CQI), is stored together with corresponding link quality measures, such as SIR values. The memory 33 is implemented as a combined random access memory (RAM) and a read only memory (ROM). Other memories are also possible in other embodiments of the invention, such as a non-volatile memory. The correction unit 32 is also connected to a transmitter 34 adapted to transmit a link quality report, based on the corrected link quality measure when appropriate, over a control channel to the Tx-unit. A controller 35, such as an integrated circuit of the mobile terminal 16, 17, is connected to the receiver 30, the quality measurement unit 31, the correction unit 32, and the memory 33 to control the operation of said units. Alternatively, a central processing unit (CPU) of the mobile terminal 16, 17 may provide the functionality of the controller 35.

Link quality reports are fed back to the Tx-unit from the Rx-unit over e.g. an up-link control channel. According to the invention, either signal-to-interference (SIR) feedback (or carrier to interference), such as a SIR value, or requested TFRC feedback, such as a TFRC indicator indicating a desired TP setting of the Tx-unit, can be utilized. However, other link quality reports may also be utilized within the scope of the invention, such as e.g. a channel quality indicator (CQI) relating to a certain TFRC.

According to the present invention, different TFRC mappings may be utilized in the communication system, one in the Tx-unit and one in the Rx-unit for interpreting the reported link quality and the measured link quality, respectively. Tx mapping is used by the Tx-unit to find a suitable TFRC setting for transmission of data packets to the Rx-unit, which corresponds as closely as possible to the requested TFRC setting. Rx mapping is used by the Rx-unit in case a required TFRC indicator shall be reported to the Tx-unit. As the Tx and Rx mappings are unmatched, this may lead to SIR losses, which according to the invention may be detected or estimated and compensated for at the Rx-unit.

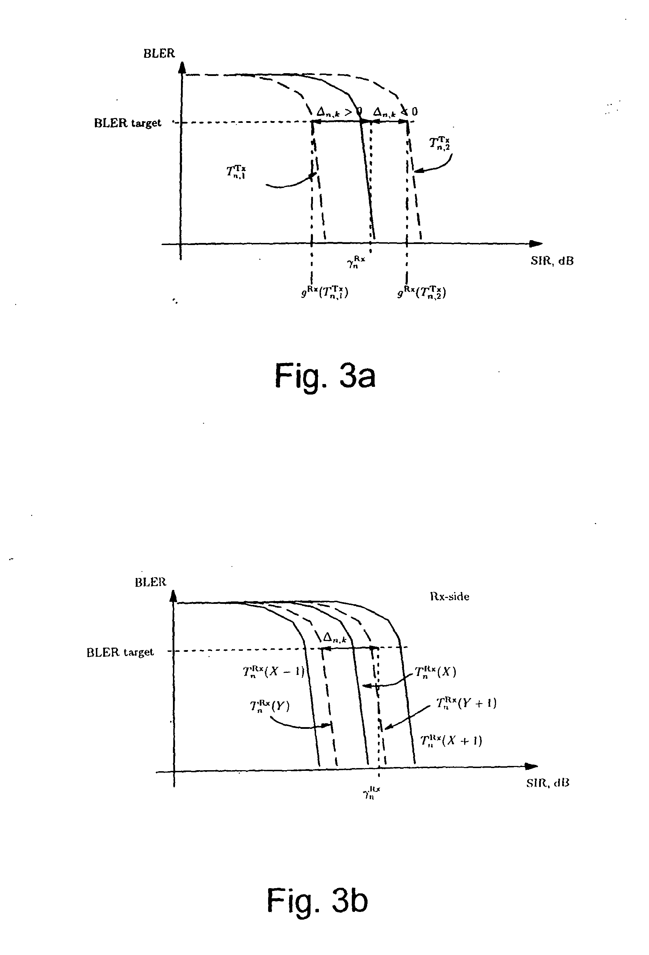

Fig. 3a illustrates a BLER versus SIR diagram for the Rx-unit when SIR reporting is utilized. The solid line corresponds to the best TFRC according to the Rx-unit that fulfills the BLER target with the user data size used by the Tx-unit. $\gamma_n^{Rx}$ is the reported SIR value for reporting interval n, which indicates a desired TP setting. The BLER target may be set differently for each Rx-unit, and may be transmitted by the Tx-unit to the Rx-unit. Furthermore, $T_{n,1}^{Tx}$ and $T_{n,2}^{Tx}$ correspond to two different TFRCs that the Tx-unit may use with the same user data size, which according to a look-up table stored at the Tx-unit matches the SIR value reported by the Rx-unit. If TFRC setting $T_{n,1}^{Tx}$ is used by the Tx-unit, then the SIR value at the Rx-unit is underestimated by the Tx-unit in the case illustrated in Fig. 3a. It is not likely that the Tx-unit chooses a TFRC so that the SIR loss or discrepancy value, $\Delta_{n,k}$, at the Rx-unit for a certain reporting interval n is $\Delta_n < 0$, but it may occur due to error events inflicted by the physical radio channel or differences between Tx-unit and Rx-unit BLER characteristics.

Fig 3b illustrates a BLER versus SIR diagram for the Rx-unit when TFRC reporting is utilized, wherein the reported TFRC indicator results in a SIR loss. The SIR $\gamma_n^{Rx}$ estimated by the Rx-unit together with the BLER target implies that TFRC $T_n^{Rx}(X)$ is optimum in the Rx-unit. Hence, $T_n^{Rx}(X)$ is reported back to the Tx-unit. It is not certain that the Tx-unit can use $T_n^{Rx}(X)$ directly because the user data size may be different. Therefore, the Tx-unit finds the closest TFRC, $T_n^{Tx}(Y)$ corresponding to TFRC $T_n^{Rx}(Y)$ at the Rx-unit, with less or equal BLER, which can carry the user data size. The unmatched physical layer transmission parameter settings of the Tx-unit and the Rx-unit cause a SIR-loss $\Delta_{n,k}$ at the Rx-unit compared to the estimated SIR $\gamma_n^{Rx}$. Moreover, Fig. 3b illustrates a case where even the next higher TFRC, $T_n^{Rx}(Y+1)$, could be used.

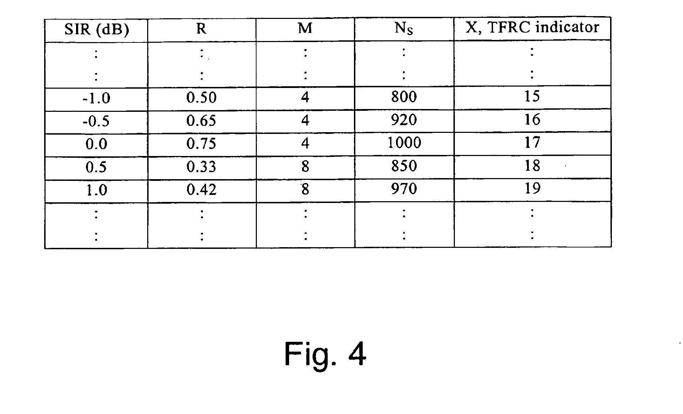

The table of Fig. 4 discloses an example of transmission parameter settings of the Tx-unit. The parameter settings are e.g. the modulation alphabet size M, code rate R, and number of symbols per transmission interval $N_s$. In this embodiment, the TFRC consists of these three parameters. However, these parameters are merely exemplary. Other parameters such as default power, code channel power offset etc can also be included in other embodiments, as will be explained below. In TFRC reporting, each of the Tx-unit and the Rx-unit has such a table, which are not necessarily the same. The code block size depends on the user data rate, i.e. how many user data bits that are encoded into a code block and transmitted in each transmission interval. Since the number of user data bits transmitted in each transmission interval depends on the available radio resource, i.e. the bandwidth or the code resource, the radio resource is included in the TFRC as the number of radio symbols $N_s$ that may be transmitted per transmission interval.

TFRC-to-SIR tables, such as the look-up table illustrated in Fig. 4 can be regarded as functions from SIR to TFRC, or vice versa. Two conversion functions f and g is used below to denote the conversion of a SIR value to a TFRC, or vice versa:

f: SIR to TFRC
g: TFRC to SIR

The conversions can be performed in either the Tx-unit or the Rx-unit. As the the Tx-unit mapping may be different from the Rx-unit mapping, $f^{Tx}$ and $g^{Tx}$ relate to the conversion in the Tx-unit, and $f^{Rx}$ and $g^{Rx}$ relate to the conversion in the Rx-unit.

Furthermore, f is not bijective, i.e. one SIR value may map to several different TFRCs. The f function can take more than one argument. For example, both the reported SIR value, and the user data size $N_s$ determined by the actual data size to be transmitted and by the available bandwidth, can be used by the Tx-unit when it selects a suitable TFRC. Hence, in this case f utilizes two entries for addressing the lookup table for retrieving a TFRC. A link adaptation system uses some kind of quantization of the parameters R, M, and $N_s$ to minimize control signaling between the Tx-unit and the Rx-unit. Therefore, there is a finite number of TFRC indicators to tabulate performance for.

Regardless of whether SIR or TFRC reporting is utilized, an internal link quality estimate or measure is formed within the Rx-unit. For each reporting interval of a transmission session, the measurement unit 31 measures the SIR value of the pilot channel. For the first reporting interval, the SIR value (or a corresponding requested TFRC value) is reported back to the Tx-unit. The TFRC setting used by the Tx-unit based on the reported link quality measure for each transmission interval following the first link quality report of a transmission session is reported to the Rx-unit over the pilot channel. Hence, for each transmission interval k of a reporting interval n, where n>0, the Rx-unit knows the previously reported link quality measure indicating the desired TP setting and the TFRC used in the Tx-unit based on that link quality report, $T_{n,k}^{Tx}$. By knowing $T_{n,k}^{Tx}$, the controller 35 may determine the corresponding SIR value by mapping $T_{n,k}^{Tx}$ against TFRC values stored in the memory 33. Consequently, after a time-period corresponding to the round trip time, the Rx-unit may determine the transmission parameter induced SIR loss or a discrepancy value for each transmission interval,

$$\Delta_{n,k} = \gamma_n^{Rx} - g^{Rx}(T_{n,k}^{Tx}),$$ i.e. a SIR loss that is caused by the unmatched Tx-unit and Rx-unit transmission parameter settings. This simple comparison is possible if a scheduler of the Tx-unit follows the SIR that corresponds to either a directly reported SIR or an implicitly conveyed SIR (by a desired TFRC).

Alternatively, the controller 35 determines a filtered discrepancy value based on at least two discrepancy values $\Delta_{n,k}$ of a reporting interval before being utilized for determining the corrected link quality measure to increase the accuracy of the transmission.

One option to filter the discrepancy value is to average a number of the discrepancy values of the transmission intervals of one reporting interval, $\Delta_{n,k}$, wherein k=1, 2,..., $N_B$, and $N_B$ is the number of transmission blocks, which are received during a reporting interval. Hence, the SIR value that was used for the previous reporting interval is retrieved from the memory 33 for determining a discrepancy value for each desired transmission interval of the reporting interval. If the number of transmission intervals during a reporting interval is for example four, each of the blocks of the transmission intervals are effected by the same link quality report and the discrepancy average could hence be formed over these four blocks since it is assumed that the TFRC may change on block-basis. More explicitly, the average discrepancy value is formed as:

$$\overline{\Delta}_n = \frac{1}{N_B} \sum_{k=1}^{N_B} \Delta_{n,k}$$

where $\Delta_{n,k}$ is determined as described above for the k:th block in a report cycle k=1,2,..., $N_B$. The filtered discrepancy value is then utilized by the correction unit 32 according to the same principles as described above to determined a corrected link quality measure, or:

$$\gamma_{n+1}^{Rx} = \gamma + \overline{\Delta}_n,$$

where $\gamma$ is the actually estimated link quality measure or SIR value of the pilot channel in reporting interval n+1. The discrepancy value, or the filtered discrepancy value, may be utilized for the SIR reporting or TFRC reporting, as will be explained below. This embodiment of the filtering is useful when there is at least one larger TFRC, which fulfills the BLER target compared to the TFRC that was used in response to the SIR or TFRC indicator reported in reporting interval n. However, when there is no larger TFRC, more advanced filtering functions may have to be employed to further increase the accuracy of the compensation.

Alternatively, the discrepancy value is not filtered, wherein one of the discrepancy values for a transmission interval of a reporting interval may be used, preferably the last discrepancy value determined for the transmission interval. Also, more advanced filtering techniques are also possible.

According to a first embodiment of the invention, TFRC reporting is used. A TP indicator corresponding to a certain SIR value is reported back to the Tx-unit. For the first reporting interval of a transmission session, the measured SIR value is directly mapped against the look-up table comprising SIR values and corresponding TFRC indicators. The lookup-table may e.g. correspond to the table of Fig. 2 without the R and M columns, and be stored in the memory 33. The Rx mapping will convert the measured link quality measure for reporting interval n, such as the SIR value, to a TFRC indicator desired by the Rx-unit, or:

$$ T_n^{Rx} = f^{Rx}(\gamma_n^{Rx}, N_{spec}) \; . $$

The user data size $N_s$, which will be used by the Tx-unit in a future transmission, is not known by the Rx-unit. Therefore, a value $N_{spec}$ is known beforehand to both the Rx-unit and the Tx-unit. The TFRC indicator, together with $N_{spec}$ when appropriate, is for the first reporting interval transmitted to the Tx-unit without any correction.

When the Tx-unit receives the desired TFRC indicator, $T_n^{Rx}$, the Tx-unit will convert it into a SIR value in case the $N_{spec}$ indicated by $T_n^{Rx}$ does not match any actual data size that should be transmitted to the Rx-unit. The actual data size in the Tx-unit may be smaller or larger than $N_{spec}$. Hence the scheduler of the Tx-unit converts the received TFRC indicator to a SIR value, which together with the available user data size $N_s$ are used as entries into the look-up table to retrieve a TFRC that matches the retrieved SIR, or:

$$ T_n^{Tx} = f^{Tx}(g^{Tx}(T_n^{Rx}), N_s) $$

However, it may be the case that the TFRC requested by the Rx-unit matches the user data size. Then there is no need to convert $T_n^{Rx}$ into a SIR value, as $T_n^{Rx}$ indicate a user data size that matches the available user data size.

When the appropriate TFRC setting is chosen by the Tx-unit, the corresponding TFRC indicator will be transmitted to the Rx-unit, and the TFRC settings will be applied for the next data packet transmission interval over the data channel.

A SIR discrepancy or loss will be observed by the Rx-unit after a time period corresponding to the round trip time, as explained above. For reporting interval n+1, the quality measurement unit 31 of the mobile terminal 16, 17 will determine the SIR corresponding to the TFRC indicator received from the Tx-unit by mapping said indicator against the look-up table to retrieve the SIR corresponding to the TFRC setting actually used by the Tx-unit. Furthermore, each SIR value corresponding to a reported TFRC indicator is temporarily stored. Then the discrepancy value may be determined as discussed above, and it may also be determined whether the discrepancy value is $\Delta_n = 0$. If not, the Rx-unit may correct the link quality measure of the subsequent reporting interval n+1 to be mappped to a TFRC indicator, which will better achieve the BLER target.

To correct or adjust the link quality measure, the Rx-unit determines the discrepancy between the SIR value corresponding to the desired TFRC indicator, and the SIR value corresponding to the used TFRC setting in reporting interval n+1 in response to said reported TFRC indicator as described above, i.e.:

$$ \Delta_n = \gamma_n^{Rx} - \gamma \; , $$

wherein $\gamma_n^{Rx}$ is the actual reported SIR value for reporting interval n in case of SIR reporting, and correspond to the TFRC indicator reported in reporting interval n in case of TFRC reporting, and where $\gamma$ is the measured SIR on the data channel. To correct the link quality measure of reporting interval n+1, the discrepancy value, or the filtered discrepancy value when appropriate, is determined and used by the correction unit 32, or:

$$ \gamma_{n+1}^{Rx} = \gamma + \overline{\Delta}_n \; , $$

where $\gamma$ is the SIR value measured for reporting interval n+1. Then, the corrected SIR value $\gamma_{n+1}^{Rx}$ is used by the controller 35 to retrieve a corresponding TFRC indicator from the memory 33, which will form the corrected link quality measure for reporting interval n+1.

According to a second embodiment of the invention, a corrected SIR estimate forms the basis of the link quality report. The same principles as in the first embodiment are used. However, as SIR reporting is used, it is not necessary to retrieve any TFRC indicator corresponding to a SIR value from the look-up table. For the first reporting interval, the SIR value measured for the pilot channel is directly incorporated into the link quality report without any correction. However, in subsequent reporting intervals the measured SIR value is corrected by the determined discrepancy or filtered discrepancy as described above.

In SIR reporting, the Tx-unit may select the appropriate TFRC, $T_n^{Tx}$, by directly utilizing the reported $\gamma_n^{Rx}$, and $N_s$ when appropriate, as entries for addressing a look-up table stored in a memory of the Tx-unit according to its own mapping:

$$T_n^{Tx} = f^{Tx}(\gamma_n^{Rx}, N_s) .$$

After a time period corresponding to the round trip time, the Rx-unit received the TFRC indicator corresponding to the used TFRC setting, and may correct or adjust any subsequent link quality measure as described above.

According to a third embodiment of the invention, the Rx-unit will take care of SIR losses although the TFRC setting at the Tx-unit is not constant during a reporting interval. An advanced scheduler, e.g. as envisaged for UMTS/HS-DSCH, may change the transmission parameter settings and thus the SIR away from the SIR that corresponds to the desired value indicated in the link quality report in order to optimize the performance of the system. Such a scheduler may e.g. use a high code rate and increase the power in case there is a shortage of physical channels to obtain a high data rate. The advanced scheduler may also use a low code rate in case the power is limited but there are physical channels, i.e channelization codes in UMTS/HS-DSCH, available for use.

The link quality report of the third embodiment may either correspond to a TFRC indicator or a SIR value, according to the previous embodiments. For convenience, reference will only be made to a TFRC reporting below. The Tx-unit will receive a desired SIR target $\gamma_n^{Tx} = \gamma_n^{Rx}$ directly, or as a desired TFRC $\gamma_n^{Tx} = g^{Tx}(T_n^{Rx})$ . . Furthermore, it is assumed that $\gamma_n^{Tx}$ corresponds to the SIR on a common pilot channel, e.g. the CPICH in UMTS. Since there is some delay between the link quality report reporting instant and the instant that the link quality report is applied to the downlink, the smart scheduler may update the link quality report with downlink power control information in HS-DSCH during that delay. The power control operates on a considerably higher rate (once per slot) than the link quality reports (generally most frequently once per three slots). Therefore, an updated estimate, in transmission interval k after link quality report number n, of the SIR of the Rx-unit as estimated by the Tx-unit is:

$$\gamma_{n,k}^{Tx} = \gamma_n^{Tx} + \delta_{PC}(n,k) ,$$

where $\delta_{PC}(n,k)$ is an accumulated power offset obtained from the downlink power control from time n, i.e. the reporting instant, to transmission interval k, i.e. the transmission interval when the value of the link quality report is applied. Here $\gamma_{n,k}^{Tx} = \gamma_n^{Tx} + \delta_{PC}(n,k)$ is regarded as the scheduler's estimate of what the Rx's CPICH will be for TI number k. The SIR of the CPICH channel is applied without any power correction. The scheduler of the Tx-unit adds a gain factor, $\delta_{HS}^{Tx}(n,k)$, (in dB) to adjust the SIR that is estimated taken the power control in consideration:

$$\gamma_{n,k}^{Tx} = \gamma_n^{Tx} + \delta_{PC}(n,k) + \delta_{HS}^{Tx}(n,k) .$$

The adjusted SIR is then mapped by the Tx-unit to retrieve a TFRC setting, which is assumed to be more appropriate, or:

$$T_{n,k}^{Tx} = f^{Tx}(\gamma_n^{Tx} + \delta_{PC}(n,k) + \delta_{HS}^{Tx}(n,k)) .$$

From the Rx-unit's point of view, this means that the reported TFRC can no longer be trusted, as the SIR value, on which the reported TFRC indicator is based, in transmission interval k is no longer known.

According to the third embodiment, the Rx-unit may estimate the TP setting induced SIR loss, i.e. the difference between the current link quality measure, $\gamma_{n,k}^{Rx}$, which in this embodiment is measured for the pilot channel in the k:th transmission interval after the n:th reporting interval, and the Rx-unit's estimate of which SIR that was the basis for the actually used TFRC in transmission interval k, $T_{n,k}^{Tx}$ :

$$\Delta_{n,k} = \gamma_{n,k}^{Rx} + \delta_{HS}^{Rx}(n,k) - g^{Rx}(T_{n,k}^{Tx}) ,$$

where $\delta_{HS}^{Rx}(n,k)$ is the HS-DSCH power offset as estimated in the Rx-unit. This estimation may be provided by estimating the difference between the SIR of the pilot channel and the physical channel.

According to the same principles as the previous embodiments, a filtered discrepancy estimate may be determined before said discrepancy is being added to the SIR estimate between reporting interval n and n+1:

$$\gamma_{n+1}^{Rx} = \gamma + \overline{\Delta}_n \ .$$

The corrected or adjusted SIR value may then be directly incorporated into the link quality report, or used for retrieving a corresponding TFRC indicator, as explained above.

The success of this procedure will depend on how well the Tx-unit estimates the Rx-unit's SIR at each time instant. In case the Tx-unit makes a bad estimate, e.g. due to bad downlink power control commands, or does not track the channel at all, then $\Delta_{n,k}$ may be rather large. Two cases may occur:

$\Delta_{n,k} >> 0$ dB: The Tx-unit has under estimated the Rx-unit's actual SIR. The inventive method will correct the discrepancy, and thereby it will increase throughput of the link.

$\Delta_{n,k} << 0$ dB: The Tx-unit has over estimated the Rx-unit's actual SIR. The inventive method will try to level the discrepancy. This will effect the throughput in a positive way since there will be less retransmissions.

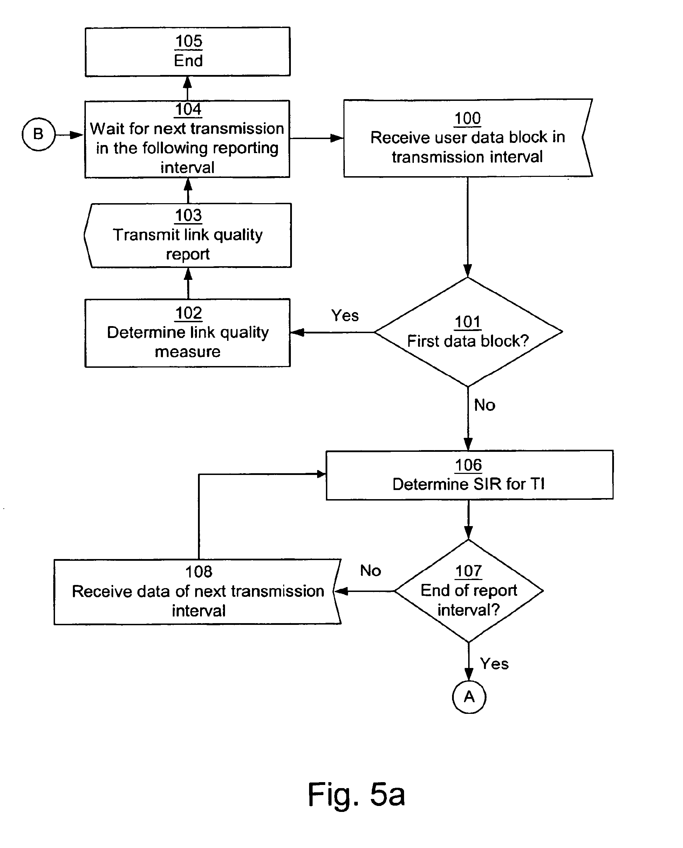

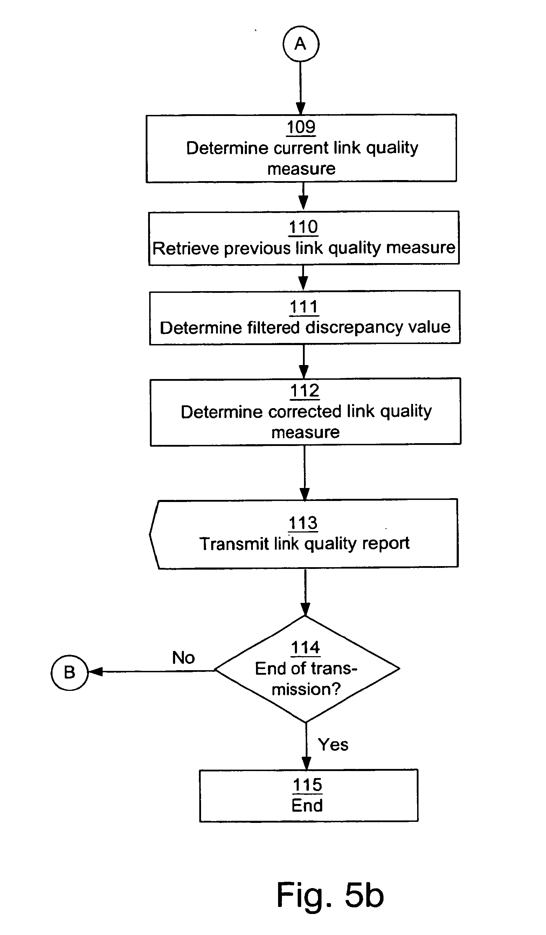

Figs. 5a and 5b illustrate the steps carried out in the Rx-unit according to one embodiment of the inventive method, wherein SIR reporting is utilized for the link quality report and the discrepancy variable or SIR loss is filtered. The procedure starts in a first step 100, wherein a signal carrying a user data block in a transmission interval is received. Alternatively, a TFRC indicator signalled by the Tx-unit is received. Then, in step 101 it is decided whether the received data block is the first block that is received in a transmission session. If so, the procedure continues in step 102, wherein the first link quality measure is determined, i.e. the SIR value of the report interval as measured for the pilot channel. Then, in step 103 the link quality report, i.e. the value of the SIR determined in step 102, is transmitted to the Tx-unit. In step 104 the procedure waits until the next transmission of the subsequent reporting interval is received, wherein the procedure continues in step 100. If no more data blocks are received, the procedure ends in step 105.

If the answer in step 101 is no, the procedure continues in step 106, wherein the SIR value for the transmission interval is determined, by mapping the TFRC indicator received over the pilot channel, and temporarily stored. In step 107 it is determined whether the report interval is ended, i.e. whether the data of the last transmission interval of the reporting interval is received. If the answer in step 107 is no, the procedure continues in step 108, wherein the data of the next transmission interval is received. Then the procedure returns to step 106 to determine the SIR of the transmission interval received in step 108. When all transmission intervals of a reporting interval has been received, i.e. when the answer in step 107 is affirmative, the procedure continues in step 109, wherein the determination of the corrected link quality measure of the present reporting interval commences, i.e. the current SIR value of the reporting interval. In step 110, the link quality measure that formed basis of the previous reporting interval is retrieved from the memory. The link quality measure for the previous reporting interval together with the link quality measures of the transmission intervals of the current reporting interval, determined in step 106, are utilized in step 111 to determine the filtered discrepancy value, as described above. In step 112 the discrepancy value is added to the current link quality measure, i.e. the SIR value of the current reporting interval, to obtain the corrected link quality measure of the current reporting interval. Then, in step 113, the link quality report comprising the corrected link quality measure is transmitted to the Tx-unit. The procedure then continues in step 114 wherein it is determined whether the transmission session is ended, e.g. by determining that higher layer signaling has commenced. If the answer is affirmative, the procedure ends in step 115. If the answer in step 114 is no, the procedure continues in step 104, where the procedure waits until data of the next transmission interval is received.

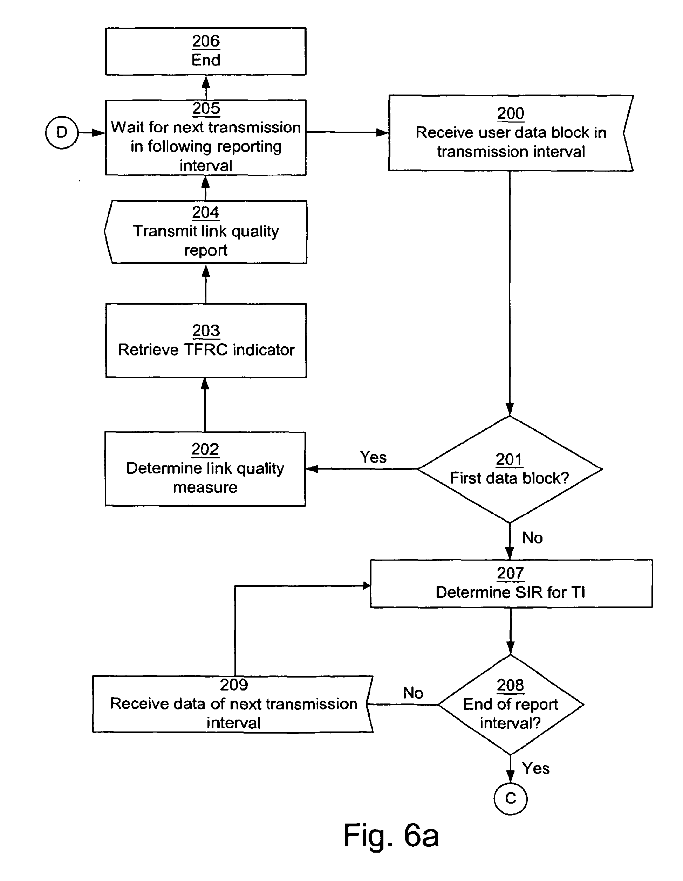

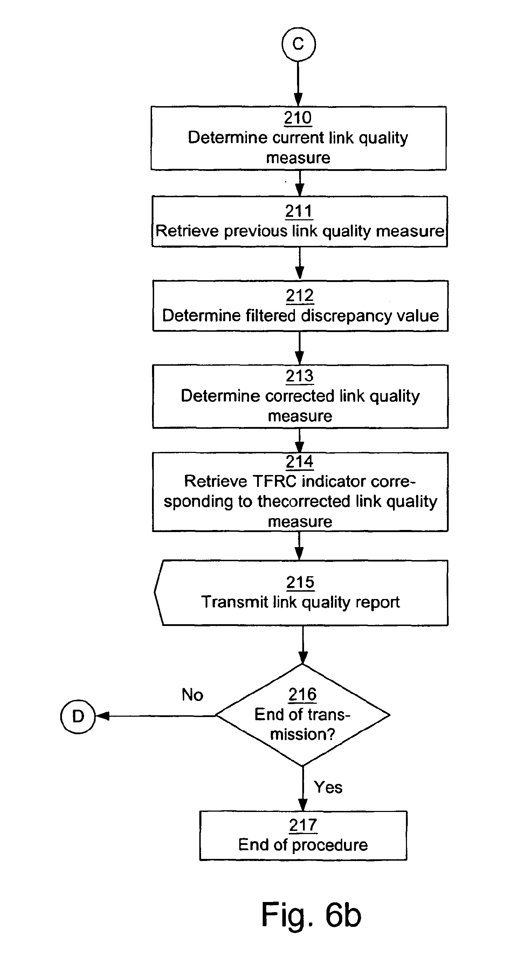

Figs. 6a and 6b illustrate the steps carried out according to an alternative embodiment of the inventive method, wherein TFRC reporting is utilized and the discrepancy value is filtered. The procedure starts in step 200, wherein a user data block is received over the data channel, or a TFRC indicator is received. Then, in step 201 it is determined whether it is the first transmission interval of a transmission session. If so, the procedure continues in step 202, wherein a current link quality measure, such as a SIR value of the current reporting interval, is determined and temporarily stored for use in a later step. In step 203 the determined current link quality measure is utilized as an index to address the look-up table. The assumed user data size may also be used as an index to address the look-up table if several TFRC indicators having different user data sizes are stored for each SIR value. In step 204, the retrieved TFRC indicator is incorporated into the link quality report and transmitted to the Tx-unit. The procedure waits in step 205 until the next transmission interval of the subsequent reporting interval or a TFRC indicator is received, wherein the procedure continues in step 200, or ends in step 206 if no more data is received.

If the answer in step 201 is no, the procedure continues in step 207, wherein the SIR of the transmission interval is determined, by mapping the TFRC indicator received for that transmission interval, and temporarily stored. In step 208 it is determined whether the report interval is ended, i.e. whether the data of all transmission intervals is received. If the answer is no, the procedure continues in step 209, wherein the TFRC indicator and the data of the next transmission interval is received. Then, the procedure returns to step 207 to determine and store the SIR value of the transmission interval received in step 209. Consequently, step 209 is repeated until all transmission intervals of a reporting interval have been received. If the answer in step 208 is affirmative, the procedure continues in step 210, wherein the current link quality measure of the reporting interval, such as a SIR value, is determined. Then, in step 211 a temporarily stored link quality measure, which formed basis of the link quality report of the previous reporting interval, is retrieved from the memory. The stored link quality measure is either an uncorrected link quality measure, if only one link quality report has been transmitted to the Tx-unit during the transmission session, or the previous corrected link quality measure if at least one link quality report has been transmitted during the transmission session. In step 212 the filtered discrepancy value is determined, e.g. according to the principles as set out above. In step 213 the corrected link quality measure, i.e. a corrected SIR value, based on the SIR value of the current reporting interval and the filtered discrepancy value, is determined and stored for use in the next reporting interval. In step 214 the corrected link quality measure is utilized as an index to address the look-up table to retrieve the TFRC indicator corresponding to the corrected link quality measure, and possibly to an assumed user data size, as described in relation to step 203. The retrieved TFRC indicator is then in step 215 incorporated into the link quality report, which is transmitted to the Tx-unit. In step 216 it is determined whether the transmission session is ended. If so the procedure ends in step 217. Otherwise, the procedure proceeds to step 205, wherein the procedure waits for the next transmission interval of the next reporting interval.

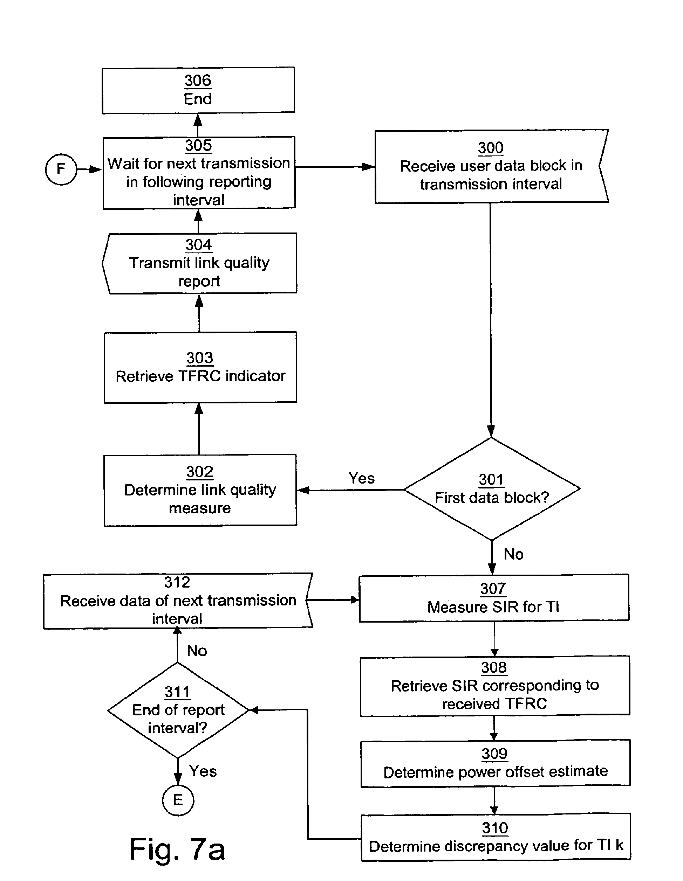

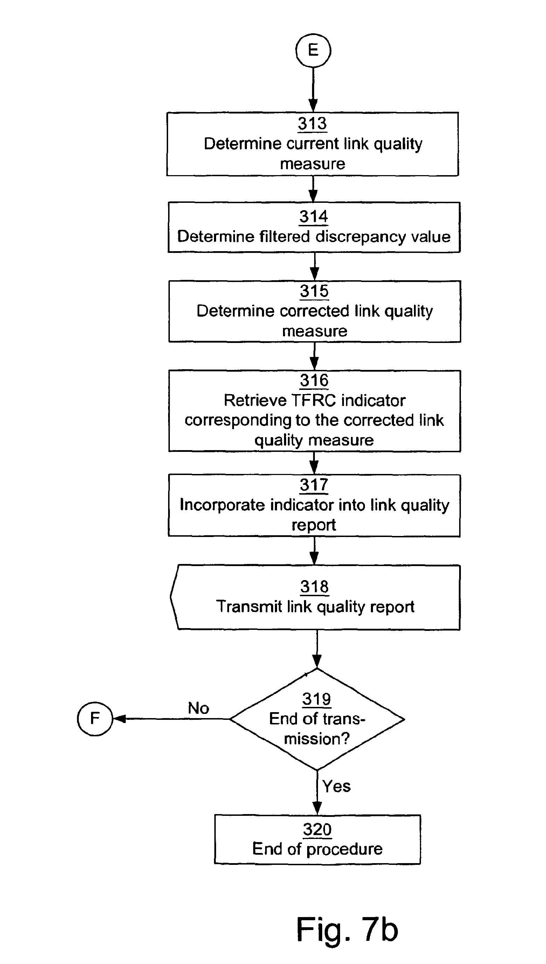

Figs. 7a and 7b illustrates the steps of yet another embodiment of inventive method, wherein TFRC reporting is utilized and the discrepancy value is filtered. The procedure starts in step 300, wherein a user data block is received over the data channel, or a TFRC indicator is received. Then, in step 301 it is determined whether it is the first transmission interval of a transmission session. If so, the procedure continues in step 302, wherein a current link quality measure, such as a SIR value of the current reporting interval, is determined and temporarily stored for use in a later step. In step 303 the determined current link quality measure is utilized as an index to address the look-up table. Also, the assumed user data size may be used as an index to address the look-up table if several TFRC indicators having different user data sizes are stored for each SIR value. In step 304, the retrieved TFRC indicator is incorporated into the link quality report and transmitted to the Tx-unit. The procedure waits in step 305 until the next transmission interval of the subsequent reporting interval or a TFRC indicator is received, wherein the procedure continues in step 300, or ends in step 306 if no more data is received.

If the answer in step 301 is no, the procedure continues in step 307, wherein the SIR of the transmission interval is measured. In step 308 the TFRC indicator received for that transmission interval is used as an index to address the look-up table to retrieve a corresponding SIR value. In step 309, the estimate of the power offset between the pilot channel and the data channel is determined. In step 310 the information obtained in steps 307-309 is used to determine a discrepancy value or a SIR loss for transmission interval k of the current reporting interval. This value is then temporarily stored. In step 311 it is determined whether the report interval is ended, i.e. whether the data of all transmission intervals is received. If the answer is no, the procedure continues in step 312, wherein the data of the next transmission interval is received and the SIR of the transmission interval is determined in step 307. Consequently, steps 307-312 are repeated until all transmission intervals of a reporting interval have been received. If the answer in step 311 is affirmative, the procedure continues in step 313, wherein the current link quality measure of the reporting interval, such as a SIR value, is determined. In step 314 the filtered discrepancy value is determined based on the transmission interval discrepancy values obtained in step 310. In step 315 the corrected link quality measure, i.e. a corrected SIR value, based on the SIR value of the current reporting interval and the filtered discrepancy value, is determined. In step 316 the corrected link quality measure is utilized as an index to address the look-up table to retrieve the TFRC indicator corresponding to the corrected link quality measure, and possibly to an assumed user data size. The retrieved TFRC indicator is in step 317 incorporated into the link quality report, which is transmitted to the Tx-unit in step 318. In step 319 it is determined whether the transmission session is ended. If so the procedure ends in step 320. Otherwise, the procedure proceeds to step 305, wherein the procedure waits for the next transmission interval of the next reporting interval.

According to one application of the present invention the method for providing corrected link quality measures is provided in a WCDMA (Wideband Code Division Multiple Access) communication system, wherein HS-DSCH is one feature. The system provides, e.g. link adaptation, fast retransmissions and incremental redundancy. Link adaptation in HS-DSCH involves two modulation schemes, QPSK (Quadrature Phase Shift Keying) and 16 QAM (16 Quadrature Amplitude Modulation), up to 15 channelization codes per user, and 64 different data sizes (denoted transport block sizes in HS-DSCH) per modulation/code-channel combination. Further, the code rate is selected to fit one HS-DSCH transport block into the number of physical channel positions available during each transmission interval. The reported unit in an HS-DSCH is a downlink channel quality indicator, CQI, of which there are 124 different values. The CQI-values maps directly to 124 different TFRC indicators, of which there are 1920 in total. Although the 124 different CQI-values are chosen to cover the interesting SIR-range as efficiently as possible, there is about 1 dB spacing between the BLER curves, and a problem still remains with mismatching Tx-and Rx-characteristics when user data rates between reported and used TFRC do not match. Therefore, utilizing the present invention to correct the reported link quality measure will take care of the mismatch.

Hence, it is the transport block size $N_{TrCH}$ together with the modulation scheme M and the number of channelization codes $N_C$ that determine how large the look-up table mentioned above needs to be:

$$N_{entries} = 2 \ N_C \ N_{TrCH} = 1920,$$

since $N_{TrCH}$=64 per M and $N_C$ combination and $N_c$=15, where the factor 2 comes from two possible modulation schemes. Each of these entries needs to contain a SIR value with a certain resolution, e.g. 8 bits. The table would in that case consume about 2 kbyt of memory.

The method according to the invention can be comprised on a computer readable medium, such as the memory 33, having embodied thereon a computer program for processing by the mobile telephone (16, 17) having digital computer capabilities, such as the controller 35. The computer program will in such a case comprise code segment for carrying out the method according to the invention, such as described in relation to the above-disclosed embodiments.

The present invention has been described above with reference to specific embodiments. The invention is only limited by the appended patent claims.

**Claims**

1. A method for providing link adaptation in a wireless communication system (1), comprising the steps of:

   obtaining a current link quality measure of a communication link between a transmitting unit and a receiving unit;
   determining a SIR, Signal-to-Interference Ratio, value of the communication link by measuring the SIR value of a pilot channel;
   reporting the SIR value to the transmitting unit;
   receiving a report comprising a transmission parameter from the transmitting unit for each transmitting interval following a first link quality report of a transmission session over the pilot channel;
   determining a discrepancy value for each transmission interval, the discrepancy value being a discrepancy between the reported SIR and a conversion function from transmission parameter to SIR, based on the transmission parameter for the transmission interval;
   correcting the current link quality measure based on the determined discrepancy value by correcting a measured SIR value with the discrepancy value for the transmission interval.

2. The method according to claim 1, further comprising:

   transmitting a link quality report being based on the corrected link quality measure.

3. The method according to claim 1 or 2, wherein a transmission parameter indicator is used as an index to address a look-up table for retrieving a corresponding SIR value.

4. The method according to claim 3, wherein the discrepancy value is determined for the reporting interval, which is based on the difference between the SIR value retrieved from the look-up table and a previous SIR value that was used to form the previous link quality report, and the discrepancy value is added to the current link quality measure to form the corrected link quality measure.

5. The method according to claim 4, wherein the discrepancy value is a filtered discrepancy value, which is based on a SIR value of each transmission interval of a reporting interval and a previous SIR value that was used to form the previous link quality report.

6. The method according to claim 3, wherein the discrepancy value is determined for the reporting interval, which is based on a SIR estimation of a signal of a transmission interval transmitted over a pilot channel corrected for any power gain factor and the SIR value retrieved from the look-up table, and the discrepancy value is added to the current link quality measure to form the corrected link quality measure.

7. The method according to claim 6, wherein the power gain factor is estimated by determining the difference between the estimated SIR value of the pilot channel, and an estimated SIR value of a signal transmitted over the data channel.

8. The method according to any of the claims 1 to 7, wherein the discrepancy value is a filtered discrepancy value, which is based on the discrepancy values determined for each transmission interval over a reporting interval.

9. The method according to claim 8, wherein the filtered discrepancy value is a mean value of the discrepancy values determined for each transmission interval over a reporting interval.

10. The method according to any of the previous claims, further comprising:

mapping the corrected current link quality measure against transmission parameter indicators stored in a look-up table, wherein the corrected link quality measure is used to address said look-up table;

retrieving a transmission parameter indicator that matches the corrected link quality measure; and

incorporating the retrieved transmission parameter indicator into the link quality report.

11. The method according to any of the previous claims, comprising:

mapping the corrected link quality measure together with a user data size value against transmission parameter indicators stored in a look-up table, wherein the corrected link quality measure and the user data size value are utilized to address the look-up table;

retrieving the transmission parameter indicator, which matches the corrected link quality measure and the user data size value; and

incorporating the retrieved transmission parameter indicator and the user data size value into the link quality report.

12. An electronic communication apparatus (16, 17) for supporting link adaptation of a communication link, comprising:

a receiver (30);
a transmitter unit (34);
a memory (33);
a measurement unit (31) for determining a current link quality measure of a communication link; and
a controller (35) ; and
a correction unit (32) adapted to determine a SIR, Signal-to-Interference Ratio, value of the communication link from a measured SIR value of a pilot channel that is reported to the transmitting unit and a report comprising a transmission parameter from the transmitting unit for each transmitting interval following a first link quality report of a transmission session over the pilot channel from which a discrepancy value is determined for each transmission interval, the discrepancy value being a discrepancy between the reported SIR and a conversion function from transmission parameter to SIR, based on the transmission parameter for the transmission interval, and to correct the current link quality measure based on the determined value with the discrepancy value for the transmission interval.

13. The apparatus according to claim 12, wherein the apparatus is adapted to:

use a transmission parameter indicator received over the communication link as an index to address a look-up table stored in the memory (33) for retrieving a corresponding SIR value.

14. The apparatus according to claim 13, wherein the apparatus is adapted to:

determine a discrepancy value for the reporting interval, which is based on the difference between the SIR value retrieved from the look-up table and a previous SIR value that was used to form the previous link quality report; and

add the discrepancy value to the current link quality measure to form the corrected link quality measure.

15. The apparatus according to claim 14, wherein the apparatus is further adapted to:

filter the discrepancy value based on a SIR value of each transmission interval of a reporting interval and a previous SIR value that was used to form the previous link quality report.

16. The apparatus according to claim 12 to 15, the apparatus is adapted to:

determine the discrepancy value for the reporting interval, which is based on a SIR estimation of the transmission interval of a signal transmitted over the pilot channel corrected for any power gain factor and the SIR value retrieved from the look-up table; and

add the discrepancy value to the current link quality measure to form the corrected link quality measure.

17. The apparatus according to claim 16, wherein the apparatus is adapted to:

estimate the power gain factor by determining the difference between the estimated SIR value of the pilot channel, and an SIR value of a signal transmitted over the data channel.

18. The apparatus according to any of the claims 12 to 17, wherein the apparatus is adapted to;
filter the discrepancy value based on the discrepancy values determined for each transmission interval of a reporting interval.

19. The apparatus according to any of the claims 12 to 18, wherein the apparatus is further adapted to:

map the corrected current link quality measure against transmission parameter indicators stored in a look-up table of the memory (33), wherein the corrected link quality measure is used to address the look-up table;

retrieve a transmission parameter indicator that matches the corrected link quality measure; and incorporate the retrieved indicator into the link quality report.

**20.** The apparatus according to any of the claims 12 to 18, wherein the apparatus is further adapted to:

map the corrected link quality measure together with a user data size value against transmission parameter indicators stored in a look-up table, wherein the corrected link quality measure and the user data size value are utilized to address the look-up table;

retrieve the transmission parameter indicator, which matches the corrected link quality measure and the user data size value; and incorporate the retrieved transmission parameter indicator and the user data size value into the link quality report.

**21.** The apparatus according to any of the claims 12 to 18, wherein the apparatus is further adapted to:

incorporate the corrected link quality measure being a SIR value into the link quality report.

**22.** The apparatus according to any of the claims 12 to 21 wherein the apparatus is a mobile radio terminal, a pager or a communicator.

**23.** The apparatus according to any of the claims 12 to 21, wherein the apparatus is a mobile telephone (16, 17).

**24.** A computer program product directly loadable into the memory of a mobile terminal (16, 17) having digital computer capabilities, comprising software code portions for performing the steps of claim 1 when said product is run by said mobile terminal (16, 17).

**Patentansprüche**

**1.** Verfahren zum Bereitstellen einer Verbindungsanpassung in einem Drahtloskommunikationssystem (1), die Schritte umfassend:

Erlangen einer derzeitigen Verbindungsqualitätsgröße einer Kommunikationsverbindung zwischen einer Sendeeinheit und einer Empfangseinheit;

Bestimmen eines SIR-Werts, Signal-zu-Interferenzverhältniswerts, der Kommunikationsverbindung durch Messen des SIR-Werts eines Pilotkanals;

Melden des SIR-Werts an die Sendeeinheit;

Empfangen einer einen Sendeparameter umfassenden Meldung von der Sendeeinheit für jedes einer ersten Qualitätsmeldung einer Sendesitzung folgende Sendeintervall über den Pilotkanal;

Bestimmen eines Diskrepanzwerts für jedes Sendeintervall, wobei der Diskrepanzwert eine Diskrepanz zwischen dem gemeldeten SIR und einer Umwandlungsfunktion von dem Sendeparameter zu dem SIR ist, basierend auf dem Sendeparameter für das Sendeintervall;

Korrigieren der derzeitigen Verbindungsqualitätsgröße basierend auf dem bestimmten Diskrepanzwert durch Korrigieren eines gemessenen SIR-Werts mit dem Diskrepanzwert für das Sendeintervall.

**2.** Verfahren nach Anspruch 1, ferner umfassend:

Senden einer Verbindungsqualitätsmeldung, die auf der korrigierten Verbindungsqualitätsgröße basiert.

**3.** Verfahren nach Anspruch 1 oder 2, wobei ein Sendeparameterindikator als in Index zum Adressieren einer Nachschautabelle für das Einholen eines entsprechenden SIR-Werts verwendet wird.

**4.** Verfahren nach Anspruch 3, wobei der Diskrepanzwert für das Meldeintervall bestimmt wird, der auf der Differenz zwischen dem von der Nachschautabelle eingeholten SIR-Wert und einem vorhergehenden SIR-Wert basiert, der zum Bilden der vorangehenden Verbindungsqualitätsmeldung verwendet worden ist, und der Diskrepanzwert zu der derzeitigen Verbindungsqualitätsgröße addiert wird zum Bilden der korrigierten Verbindungsqualitätsgröße.

**5.** Verfahren nach Anspruch 4, wobei der Diskrepanzwert ein gefilterter Diskrepanzwert ist, der auf einem SIR-Wert des jeweiligen Intervalls eines Meldeintervalls und einem vorangehenden SIR-Wert basiert, der zum Bilden der vorangehenden Verbindungsqualitätsmeldung verwendet worden ist.

**6.** Verfahren nach Anspruch 3, wobei der Diskrepanzwert für das Meldeintervall bestimmt wird, der auf einer SIR-Schätzung eines Signals eines über einen Pilotkanal gesendeten Sendeintervalls korrigiert für irgendeinen Leistungsverstärkungsfaktor, und dem SIR-Wert basiert, der von der Nachschautabelle eingeholt worden ist, und der Diskrepanzwert zum Bilden der korrigierten Verbindungsqualitätsgröße zu der derzeitigen Verbindungsqualitätsgröße hinzugefügt wird.

**7.** Verfahren nach Anspruch 6, wobei der Leistungsverstärkungsfaktor durch Bestimmen der Differenz zwischen dem geschätzten SIR-Wert des Pilotkanals und einem geschätzten SIR-Wert eines über den Datenkanal gesendeten Signals geschätzt wird.

**8.** Verfahren nach einem der Ansprüche 1 bis 7, wobei der Diskrepanzwert ein gefilterter Diskrepanzwert ist, der auf den für jedes Sendeintervall bestimmten Diskrepanzwerten über ein Meldeintervall basiert.

**9.** Verfahren nach Anspruch 8, wobei der gefilterte Diskrepanzwert ein Durchschnittswert der für jedes Sendeintervall bestimmten Diskrepanzwerte über ein Meldeintervall ist.

**10.** Verfahren nach einem der vorhergehenden Ansprüche, ferner umfassend:

Abbilden der korrigierten derzeitigen Verbindungsqualitätsgrößen auf Sendeparameterindikatoren, die in einer Nachschautabelle gespeichert sind, wobei die korrigierte Verbindungsqualitätsgröße zum Adressieren der Nachschautabelle verwendet wird;
Einholen eines Sendeparameterindikators, der zu der korrigierten Verbindungsgröße passt; und
Einarbeiten des eingeholten Sendeparameterindikators in die Verbindungsqualitätsmeldung.

**11.** Verfahren nach einem der vorhergehenden Ansprüche, umfassend:

Abbilden der korrigierten Verbindungsqualitätsgröße gemeinsam mit einem Benutzerdatengrößenwert auf in einer Nachschautabelle gespeicherte Sendeparameterindikatoren, wobei die korrigierte Verbindungsqualitätsgröße und der Benutzerdatengrößenwert zum Adressieren der Nachschautabelle verwendet werden;
Einholen des Sendeparameterindikators, der zu der korrigierten Verbindungsqualitätsgröße und dem Benutzerdatengrößenwert passt; und
Einarbeiten des eingeholten Sendeparameterindikators und des Benutzerdatengrößenwerts in die Verbindungsqualitätsmeldung.

**12.** Elektronische Kommunikationsvorrichtung (16, 17) zum Unterstützen einer Verbindungsanpassung einer Kommunikationsverbindung, umfassend:

einen Empfänger (30);
eine Sendeeinheit (34);
einen Speicher (33);
eine Messeinheit (31) zum Bestimmen einer derzeitigen Verbindungsqualitätsgröße einer Kommunikationsverbindung; und

eine Steuerung (35); und
eine Korrektureinheit (32), die angepasst ist zum Bestimmen eines SIR-Werts, Signal-zu-Interferenzverhältniswerts, der Kommunikationsverbindung von einem gemessenen SIR-Wert eines Pilotkanals, der der Sendeeinheit gemeldet worden ist, und einer einen Sendeparameter von der Sendeeinheit umfassenden Meldung für jedes einer ersten Verbindungsqualitätsmeldung einer Sendesitzung folgende Sendeintervall über den Pilotkanal, von dem ein Diskrepanzwert für jedes Sendeintervall bestimmt wird, wobei der Diskrepanzwert eine Diskrepanz zwischen dem gemeldeten SIR und einer Umwandlungsfunktion von einem Sendeparameter zu einem SIR ist, basierend auf dem Sendeparameter für das Sendeintervall, und zum Korrigieren der derzeitigen Verbindungsqualitätsgröße basierend auf dem bestimmten Wert mit dem Diskrepanzwert für das Sendeintervall.

**13.** Vorrichtung nach Anspruch 12, wobei die Vorrichtung angepasst ist, um:

einen über die Kommunikationsverbindung empfangenen Sendeparameterindikator als einen Index zum Adressieren einer in dem Speicher (33) gespeicherte Nachschautabelle zum Einholen eines entsprechenden SIR-Werts zu verwenden.

**14.** Vorrichtung nach Anspruch 13, wobei die Vorrichtung angepasst ist, um:

einen Diskrepanzwert für das Meldeintervall zu bestimmen, der auf der Differenz zwischen dem von der Nachschautabelle eingeholten SIR-Wert und einem vorangehenden SIR-Wert basiert, der zum Bilden der vorangehenden Verbindungsqualitätsmeldung verwendet worden ist; und
den Diskrepanzwert zu der derzeitigen Verbindungsqualitätsgröße hinzuzufügen zum Bilden der korrigierten Verbindungsqualitätsgröße.

**15.** Vorrichtung nach Anspruch 14, wobei die Vorrichtung ferner angepasst ist, um:

den auf einem SIR-Wert jedes Sendeintervalls eines Meldeintervalls und einem vorangehenden SIR-Wert, der zum Bilden der vorangehenden Verbindungsqualitätsmeldung verwendet worden ist, basierenden Diskrepanzwert zu filtern.

**16.** Vorrichtung nach Anspruch 12 bis 15, wobei die Vorrichtung angepasst ist, um:

den Diskrepanzwert für das Meldeintervall zu bestimmen, der auf einer SIR-Schätzung des Sendeintervalls eines über dem Pilotkanal gesendeten Signals korrigiert in Bezug auf irgendeinen Leistungsverstärkungsfaktor, und dem von der Nachschautabelle eingeholten SIR-Wert basiert; und

den Diskrepanzwert zu der derzeitigen Verbindungsqualitätsgröße hinzuzufügen zum Bilden der korrigierten Verbindungsqualitätsgröße.

17. Vorrichtung nach Anspruch 16, wobei die Vorrichtung angepasst ist, um:

den Leistungsverstärkungsfaktor durch Bestimmen der Differenz zwischen dem geschätzten SIR-Wert des Pilotkanals und einem SIR-Wert eines über den Datenkanal gesendeten Signals zu schätzen.

18. Vorrichtung nach einem der Ansprüche 12 bis 17, wobei die Vorrichtung angepasst ist, um:

den auf den für jedes Sendeintervall eines Meldeintervalls bestimmten Diskrepanzwerten basierenden Diskrepanzwert zu filtern.

19. Vorrichtung nach einem der Ansprüche 12 bis 18, wobei die Vorrichtung ferner angepasst ist, um:

die korrigierte Verbindungsqualitätsgröße auf in einer Nachschautabelle des Speichers (33) gespeicherte Sendeparameterindikatoren abzubilden, wobei die korrigierte Verbindungsqualitätsgröße zum Adressieren der Nachschautabelle verwendet wird;

einen Sendeparameterindikator einzuholen, der zu der korrigierten Verbindungsqualitätsgröße passt; und

den eingeholten Indikator in die Verbindungsqualitätsmeldung einzuarbeiten.

20. Vorrichtung nach einem der Ansprüche 12 bis 18, wobei die Vorrichtung ferner angepasst ist, um:

die korrigierte Verbindungsqualitätsgröße gemeinsam mit einem Benutzerdatengrößenwert auf in einer Nachschautabelle gespeicherte Sendeparameterindikatoren abzubilden, wobei die korrigierte Verbindungsqualitätsgröße und der Benutzerdatengrößenwert zum Adressieren der Nachschautabelle verwendet werden;

den Sendeparameterindikator, der zu der korrigierten Verbindungsqualitätsgröße und dem Benutzerdatengrößenwert passt, einzuholen; und

den eingeholten Sendeparameterindikator und den Benutzerdatengrößenwert in die Verbindungsqualitätsmeldung einzuarbeiten.

21. Vorrichtung nach einem der Ansprüche 12 bis 18, wobei die Vorrichtung ferner angepasst ist, um:

die korrigierte Verbindungsqualitätsgröße, die ein SIR-Wert ist, in die Verbindungsqualitätsmeldung einzuarbeiten.

22. Vorrichtung nach einem der Ansprüche 12 bis 21, wobei die Vorrichtung ein Mobilfunkendgerät, ein Funkrufgerät oder ein Kommunikator ist.

23. Vorrichtung nach einem der Ansprüche 12 bis 21, wobei die Vorrichtung ein Mobiltelefon (16, 17) ist.

24. Computerprogrammprodukt, das direkt in einen Speicher eines Mobilendgeräts (16, 17) mit digitaler Computerfähigkeit ladbar ist, Softwarecodeabschnitte umfassend zum Ausführen der Schritte des Anspruchs 1, wenn das Produkt durch das Mobilendgerät (16, 17) ablaufen gelassen wird.

## Revendications

1. Procédé de fourniture d'une adaptation de la liaison, dans un système de communication sans fil (1), comprenant les étapes consistant à :

obtenir une mesure de qualité de liaison courante sur une liaison de communication entre une unité émettrice et une unité réceptrice ;

déterminer une valeur de rapport signal sur interférences, SIR pour « *Signal-to-Interference Ratio* », pour la liaison de communication en mesurant la valeur de rapport SIR d'un canal pilote ;

rapporter la valeur de rapport SIR à l'unité émettrice ;

recevoir de l'unité émettrice un rapport contenant un paramètre d'émission pour chaque intervalle d'émission suivant un premier rapport de qualité de liaison dans une session d'émission sur le canal pilote ;

déterminer une valeur de divergence pour chaque intervalle d'émission, la valeur de divergence étant une divergence entre le rapport SIR rapporté et une fonction de conversion du paramètre d'émission au rapport SIR, sur la base du paramètre d'émission pour l'intervalle d'émission ;

corriger la mesure de qualité de liaison courante sur la base de la valeur de divergence déterminée, en corrigeant une valeur de rapport SIR mesurée avec la valeur de divergence pour l'intervalle d'émission.

**2.** Procédé selon la revendication 1, comprenant en outre l'étape consistant à :

émettre un rapport de qualité de liaison basé sur la mesure de qualité de liaison corrigée.

**3.** Procédé selon la revendication 1 ou 2, dans lequel un indicateur de paramètre d'émission est utilisé comme index pour l'adressage d'une table de consultation afin d'obtenir une valeur de rapport SIR correspondante.

**4.** Procédé selon la revendication 3, dans lequel la valeur de divergence est déterminée pour l'intervalle de rapport, sur la base de la différence entre la valeur de rapport SIR lue dans la table de consultation et une valeur antérieure de rapport SIR utilisée pour former le précédent rapport de qualité de liaison, et dans lequel la valeur de divergence est ajoutée à la mesure de qualité de liaison courante pour former la mesure de qualité de liaison corrigée.

**5.** Procédé selon la revendication 4, dans lequel la valeur de divergence est une valeur de divergence filtrée qui est fondée sur une valeur de rapport SIR pour chaque intervalle d'émission d'un intervalle de rapport et sur une valeur de rapport SIR antérieure qui avait été utilisée pour former le précédent rapport de qualité de liaison.

**6.** Procédé selon la revendication 3, dans lequel la valeur de divergence est déterminée pour l'intervalle de rapport, sur la base d'une estimation de rapport SIR pour un signal d'un intervalle d'émission émis sur un canal pilote, corrigée d'un éventuel facteur de gain de puissance, et sur la valeur de rapport SIR lue dans la table de consultation, et dans lequel la valeur de divergence est ajoutée à la mesure de la qualité de liaison courante pour former la mesure de qualité de liaison corrigée.

**7.** Procédé selon la revendication 6, dans lequel le facteur de gain de puissance est estimé en déterminant la différence entre la valeur de rapport SIR estimée du canal pilote et une valeur de rapport SIR estimée pour un signal émis sur le canal de données.

**8.** Procédé selon l'une quelconque des revendications 1 à 7, dans lequel la valeur de divergence est une valeur de divergence filtrée qui est basée sur les valeurs de divergence déterminées pour chaque intervalle d'émission sur un intervalle de rapport.

**9.** Procédé selon la revendication 8, dans lequel la valeur de divergence filtrée est une valeur moyenne des valeurs de divergence déterminées pour chaque intervalle d'émission sur un intervalle de rapport.

**10.** Procédé selon l'une quelconque des revendications précédentes, comprenant en outre les étapes consistant à :

faire correspondre la mesure de qualité de liaison courante corrigée avec des indicateurs de paramètre d'émission stockés dans une table de consultation, la mesure de qualité de liaison corrigée étant utilisée pour l'adressage de ladite table de consultation ;
obtenir un indicateur de paramètre d'émission qui correspond à la mesure de qualité de liaison corrigée ; et
intégrer l'indicateur de paramètre d'émission obtenu dans le rapport de qualité de liaison.

**11.** Procédé selon l'une quelconque des revendications précédentes, comprenant les étapes consistant à :

faire correspondre la mesure de qualité de liaison corrigée et une valeur de taille des données utilisateurs avec des indicateurs de paramètre d'émission stockés dans une table de consultation, la mesure de qualité de liaison corrigée et la valeur de taille des données utilisateurs étant utilisées pour l'adressage de ladite table de consultation ;
obtenir un indicateur de paramètre d'émission qui correspond à la mesure de qualité de liaison corrigée et à la valeur de taille des données utilisateurs ; et
intégrer l'indicateur de paramètre d'émission obtenu et la valeur de taille des données utilisateurs dans le rapport de qualité de liaison.

**12.** Appareil de communication électronique (16, 17) destiné à supporter l'adaptation de liaison, pour une liaison de communication, comprenant :

un récepteur (30) ;
une unité émettrice (34) ;
une mémoire (33) ;
une unité de mesure (31) destinée à déterminer une mesure de qualité de liaison courante pour une liaison de communication ;
un contrôleur (35) ; et
une unité de correction (32) conçue pour déterminer une valeur de rapport signal sur interférences, SIR, de la liaison de communication à partir d'une valeur de rapport SIR mesurée sur un canal pilote qui est rapportée à l'unité émettrice et d'un rapport provenant de l'unité émettrice et comprenant un paramètre d'émission pour chaque intervalle d'émission suivant un premier rapport de qualité de liaison, dans une session d'émission sur le canal pilote, à partir de quoi une valeur de divergence est déterminée pour chaque intervalle d'émission, la valeur de divergence étant une divergence entre le rapport SIR rapporté et une fonction de conversion du paramètre d'émission au rapport SIR, sur la base du paramètre d'émission pour l'intervalle d'émission, et pour corriger la mesure de qualité de liaison courante sur la base de la valeur déterminée avec la valeur de divergence pour l'intervalle d'émission.

13. Appareil selon la revendication 12, l'appareil étant conçu pour utiliser un indicateur de paramètre d'émission, reçu sur la liaison de communication, comme index pour l'adressage d'une table de consultation stockée dans la mémoire (33) afin d'obtenir une valeur de rapport SIR correspondante.

14. Appareil selon la revendication 13, l'appareil étant conçu :

    pour déterminer une valeur de divergence pour l'intervalle de rapport, sur la base de la différence entre la valeur de rapport SIR lue dans la table de consultation et une valeur de rapport SIR antérieure qui avait été utilisée pour former le précédent rapport de qualité de liaison ; et
    pour ajouter la valeur de divergence à la mesure de qualité de liaison courante pour former la mesure de qualité de liaison corrigée.

15. Appareil selon la revendication 14, l'appareil étant en outre conçu pour filtrer la valeur de divergence sur la base d'une valeur de rapport SIR de chaque intervalle d'émission d'un intervalle de rapport et d'une valeur de rapport SIR antérieure qui avait été utilisée pour former le précédent rapport de qualité de liaison.

16. Appareil selon les revendications 12 à 15, l'appareil étant en outre conçu :

    pour déterminer la valeur de divergence pour l'intervalle de rapport, sur la base d'une estimation du rapport SIR de l'intervalle d'émission d'un signal émis sur le canal pilote, corrigée d'un éventuel facteur de gain de puissance, et de la valeur de rapport SIR lue dans la table de consultation ; et
    pour ajouter la valeur de divergence à la mesure de qualité de liaison courante pour former la mesure de qualité de liaison corrigée.

17. Appareil selon la revendication 16, l'appareil étant conçu pour estimer le facteur de gain de puissance en déterminant la différence entre la valeur de rapport SIR estimée du canal pilote et une valeur de rapport SIR pour un signal émis sur le canal de données.

18. Appareil selon l'une quelconque des revendications 12 à 17, l'appareil étant conçu pour filtrer la valeur de divergence sur la base des valeurs de divergence déterminées pour chaque intervalle d'émission sur un intervalle de rapport.

19. Appareil selon l'une quelconque des revendications 12 à 18, l'appareil étant en outre conçu :

    pour faire correspondre la mesure de qualité de liaison courante corrigée avec des indicateurs de paramètre d'émission stockés dans une table de consultation de la mémoire (33), la mesure de qualité de liaison corrigée étant utilisée pour l'adressage de la table de consultation ;
    pour obtenir un indicateur de paramètre d'émission qui correspond à la mesure de qualité de liaison corrigée ; et
    pour intégrer l'indicateur obtenu dans le rapport de qualité de liaison.

20. Appareil selon l'une quelconque des revendications 12 à 18, l'appareil étant en outre conçu .

    pour faire correspondre la mesure de qualité de liaison corrigée et une valeur de taille des données utilisateurs avec des indicateurs de paramètre d'émission stockés dans une table de consultation, la mesure de qualité de liaison corrigée et la valeur de taille des données utilisateurs étant utilisées pour l'adressage de ladite table de consultation ;
    pour obtenir un indicateur de paramètre d'émission qui correspond à la mesure de qualité de liaison corrigée et à la valeur de taille des données utilisateurs ; et
    pour intégrer l'indicateur de paramètre d'émission obtenu et la valeur de taille des données utilisateurs dans le rapport de qualité de liaison.

21. Appareil selon l'une quelconque des revendications 12 à 18, l'appareil étant en outre conçu pour intégrer la mesure de qualité de liaison corrigée constituant une valeur de rapport SIR dans le rapport de qualité de liaison.

22. Appareil selon l'une quelconque des revendications 12 à 21, l'appareil étant un terminal radio mobile, un boîtier de recherche de personnes ou un communicateur.

23. Appareil selon l'une quelconque des revendications 12 à 21, l'appareil étant un téléphone mobile (16, 17).

24. Progiciel d'ordinateur pouvant être chargé directement dans la mémoire d'un terminal mobile (16, 17) ayant des capacités d'ordinateur numérique, comprenant des portions de code logiciel destinées à exécuter les étapes de la revendication 1 lorsque ledit progiciel est exécuté par ledit terminal mobile (16, 17).

## Fig. 1

Input signal

16, 17

30 — Receiver

35

Controller

31 — Quality
measurement unit

32 — Correction unit

33

Memory

34 — Transmitter

Link quality report

# Fig. 2

# Fig. 3a

# Fig. 3b

| SIR (dB) | R | M | $N_S$ | X, TFRC indicator |
|---|---|---|---|---|
| : | : | : | : | : |
| : | : | : | : | : |
| -1.0 | 0.50 | 4 | 800 | 15 |
| -0.5 | 0.65 | 4 | 920 | 16 |
| 0.0 | 0.75 | 4 | 1000 | 17 |
| 0.5 | 0.33 | 8 | 850 | 18 |
| 1.0 | 0.42 | 8 | 970 | 19 |
| : | : | : | : | : |
| : | : | : | : | : |

# Fig. 4

Fig. 5a

(A)

**109**
Determine current link quality measure

**110**
Retrieve previous link quality measure

**111**
Determine filtered discrepancy value

**112**
Determine corrected link quality measure

**113**
Transmit link quality report

**114**
End of transmission?

No → (B)

Yes

**115**
End

# Fig. 5b

**206**
End

**205**
Wait for next transmission in following reporting interval

D

**200**
Receive user data block in transmission interval

**204**
Transmit link quality report

**203**
Retrieve TFRC indicator

**202**
Determine link quality measure

Yes

**201**
First data block?

No

**207**
Determine SIR for TI

**209**
Receive data of next transmission interval

No

**208**
End of report interval?

Yes

C

# Fig. 6a

C

**210**
Determine current link quality measure

**211**
Retrieve previous link quality measure

**212**
Determine filtered discrepancy value

**213**
Determine corrected link quality measure

**214**
Retrieve TFRC indicator corre-sponding to thecorrected link quality measure

**215**
Transmit link quality report

No ← **216**
End of trans-mission?

D

Yes

**217**
End of procedure

# Fig. 6b

306
End

305
Wait for next transmission in following reporting interval

F

300
Receive user data block in transmission interval

304
Transmit link quality report

303
Retrieve TFRC indicator

302
Determine link quality measure

Yes

301
First data block?

No

312
Receive data of next transmission interval

307
Measure SIR for TI

No

311
End of report interval?

308
Retrieve SIR corresponding to received TFRC

Yes

E

309
Determine power offset estimate

310
Determine discrepancy value for TI k

# Fig. 7a

```
        ( E )
          │
          ▼
┌─────────────────────────┐
│          313            │
│ Determine current link  │
│    quality measure      │
└─────────────────────────┘
          │
          ▼
┌─────────────────────────┐
│          314            │
│ Determine filtered      │
│   discrepancy value     │
└─────────────────────────┘
          │
          ▼
┌─────────────────────────┐
│          315            │
│ Determine corrected     │
│  link quality measure   │
└─────────────────────────┘
          │
          ▼
┌─────────────────────────┐
│          316            │
│ Retrieve TFRC indicator │
│ corresponding to the    │
│ corrected link quality  │
│       measure           │
└─────────────────────────┘
          │
          ▼
┌─────────────────────────┐
│          317            │
│ Incorporate indicator   │
│ into link quality report│
└─────────────────────────┘
          │
          ▼
┌─────────────────────────┐
│          318            │
│ Transmit link quality   │
│        report           │
└─────────────────────────┘
          │
          ▼
        ╱ 319 ╲
( F )◄─No─ End of trans-
        ╲ mission? ╱
          │
         Yes
          │
          ▼
┌─────────────────────────┐
│          320            │
│    End of procedure     │
└─────────────────────────┘
```

# Fig. 7b

**EP 1 460 789 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20020110088 A
- US 6292519 A
- EP 0890845 A